# EUROPEAN PATENT SPECIFICATION

(11) **EP 1 864 575 B1**
(45) Date of publication and mention of the grant of the patent: **26.11.2008**
(21) Application number: 07109941.0
(22) Date of filing: 08.06.2007
(51) Int. Cl.: A21B 3/13, A23G 3/02

(54) **Silicone baking pan**
Silikonbackblech
Moule cuisson en silicone

(30) Priority: 09.06.2006 US 804386 P
(43) Date of publication of application: 12.12.2007
(73) Proprietor: Progressive International Corp., Kent, WA 98032 (US)
(72) Inventor: Kaposi, Sascha, Tacoma, WA 98406 (US)
(74) Representative: Wallis, Helen Frances Mary

(56) References cited:
- EP-A- 1 391 173
- EP-A2- 1 197 149
- FR-A3- 2 822 024
- US-A1- 2005 193 899
- US-A1- 2006 083 833

## Description

### FIELD OF THE INVENTION

This invention relates generally to cooking pans and, more particularly, to pans used for baking.

### BACKGROUND OF THE INVENTION

Removing a cake from a cake pan has always been a delicate operation. Hours of work can be destroyed when the cake fails to separate from the pan and breaks apart. The same is true for muffins, breads, and other baked goods. Silicone has recently been used for baking pans, allowing the pan to be inverted to remove the food item from the pan. However, the walls of such pans are typically thin in order to permit heat transfer and to enable inversion. As a result, filling the pans, moving the pans to the oven, and removing the cake must be done very carefully to avoid inadvertent flexing that may cause the batter to spill or the cake to break apart or become deformed. The same issues also apply to other molded food items such as muffins, gelatins, and others.

In addition to the foregoing problems, existing silicone molds are typically unstable because the silicone is inherently flexible. The molds have difficulty resting on a surface and may tend to collapse under their own weight or under the weight of the mold when filled.
EP1391173 discloses an adjustable food mold having molding chambers with deformable portions to allow the internal shape of the molding chambers to be altered.

### BRIEF DESCRIPTION OF THE DRAWINGS

Preferred and alternative embodiments of the present invention are described in detail below with reference to the following drawings.

FIGURE 1 is a perspective view of a cake pan in accordance with an embodiment of the present invention;

FIGURE 2 is a top view of a cake pan, in accordance with an embodiment of the present invention;

FIGURE 3 is a side cross-sectional view of the cake pan of FIGURE 1, taken along line A-A in FIGURE 1;

FIGURE 4 is a close-up view of detail C indicated in FIGURE 3;

FIGURE 5 is a top view of a cupcake pan, in accordance with an embodiment of the present invention; and

FIGURE 6 is a side view of the cupcake pan of FIGURE 5.

### DETAILED DESCRIPTION OF THE PREFERRED EMBODIMENT

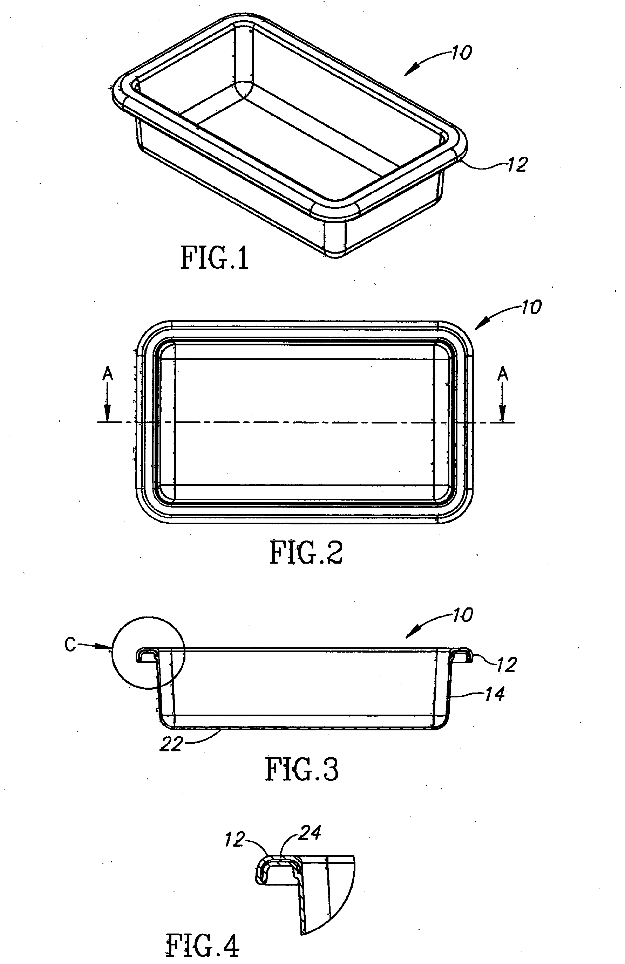

Referring to FIGURES 1-3, a pan 10 is integrally formed from a flexible material that is suitable for baking or molding food products. In the preferred embodiment, the pan is formed from food grade silicone. The pan includes a rim 12 at the top and a wall 14 extending between the rim and a base 22 at the bottom. The wall 14 is sufficiently thick that the pan can support its own weight.

In the example shown, the wall 14 includes an upper portion more closely adjacent the rim 12 and a lower portion relatively adjacent the base 22. In some embodiments, the upper portion of the wall may be relatively thicker than the lower portion of the wall. In use, the wall 14 is more prone to bending along the lower portion than the upper portion. This distinction in flexibility allows the mold to more readily become inverted than would otherwise be the case if the entirety of the mold included a pattern as with the lower portion of the mold.

The rim 12 includes a stiffening element that is preferably a metal ring 24 having a U-shaped cross section, as best seen in FIGURE 4. As shown, it may more accurately be described as an inverted J-shape, but the term "U-shape" will be used within this description to generically include such curved shapes regardless of whether each vertical side of the U is of equal height. The U-shape provides stiffness in multiple directions while being light-weight. In the example of the invention as shown and noted above, one of the legs of the U-shape is longer than the other. The upper portion of the wall 14 terminates in one leg of the U-shaped stiffening ring 24. In addition, as shown, the stiffening ring is surrounded by the integrally formed silicone material of the mold.

When a baked good such as cake is prepared using the pan 10, a cook may turn the pan over and press on the bottom of the wall 14 or the base of the pan in order to invert the pan 10 and remove a cake or other molded item. As noted above, the wall 14 may tend to bend or flex readily along the base and the lower portion of the wall. In this manner, the lower portion can be pushed downwardly to apply a force across the top of the cake and separate the cake from the pan. The cook may then lift up on the rim 12 to release the cake from the pan.

In the form as shown in Figures 1-3, the mold may be generally smooth, both inside and out. Alternatively, the mold may include a pattern of curves, circles, or other designs in a relief pattern that appears on both the internal and external sides of the mold. This pattern imparts a corresponding pattern on the cake or other food item being prepared with the mold.

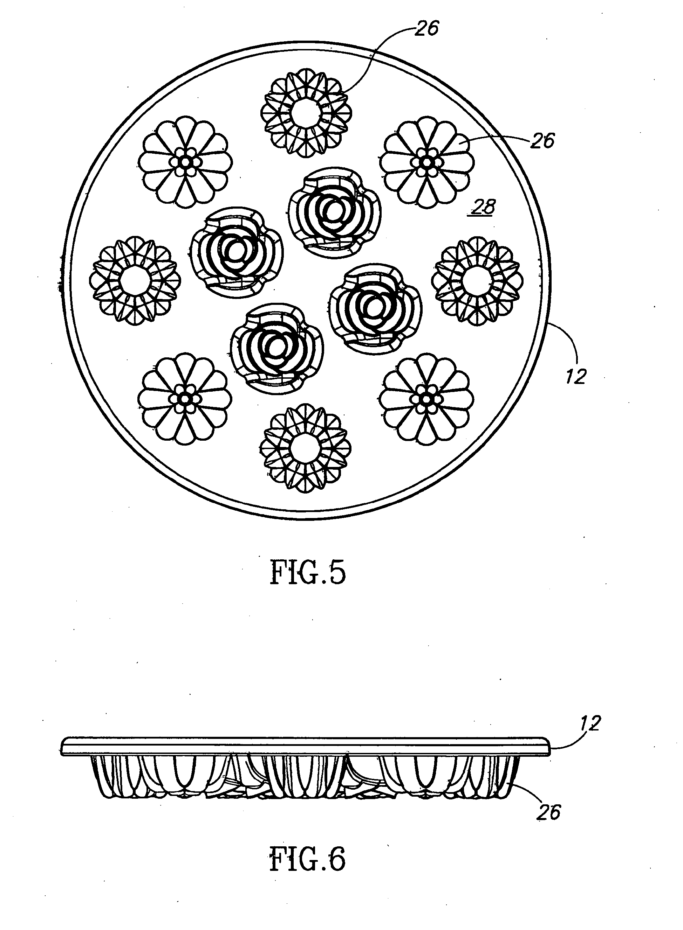

In another example of the invention, the molded pan is in the form of a plurality of muffin cups. Referring to FIGURES 5 and 6, several cups 26 may be formed and extending downwardly from a substantially planar portion 28. A peripheral stiffening ring is provided at the perimeter of the muffin pan. In the illustrated embodiment, the metal ring has an inverted U-shaped cross section with the planar portion 28 of the pan being generally coplanar with the top of the metal ring (or the base of the U). Though not illustrated in FIGURES 5 and 6, the stiffening ring is substantially the same as that depicted in the cross-sectional views of FIGURES 3 and 4. The embodiment of FIGURES 5 and 6 is advantageous inasmuch as each individual cup 26 does not need to be supported by the cook's hand when moving the filled pan.

In the example shown, the muffin cups are each formed in the shape of an aesthetically pleasing design, such as flowers. In a preferred form, the pan includes twelve muffin cups, with four of each of three different floral designs. Although not shown in the example of Figures 5 and 6, all or some of the muffin cups may also include a base such as that described with respect to the cake pan of Figure 1.

While the preferred embodiment of the invention has been illustrated and described, as noted above, many changes can be made without departing from the scope of the invention. Accordingly, the scope of the invention is not limited by the disclosure of the preferred embodiment. Instead, the invention should be determined entirely by reference to the claims that follow.

## Claims

1. A mold (10) for preparing a food item, comprising:
a base (22);
a rim (12);
a peripheral wall (14) extending upward from the base to the rim and defining an interior space, the peripheral wall and base being integrally formed from a flexible food-grade material; and being **characterized by**:
a U-shaped stiffening element (24) secured to the mold at the rim, the stiffening element being encased within the flexible material forming the mold.

2. The mold of claim 1, wherein the U-shaped stiffening element (24) further comprises a first vertical wall and a second vertical wall, the first vertical wall being longer than the second vertical wall.

3. The mold of claim 2, wherein the first vertical wall defines an exterior peripheral edge of the rim (12) and the second wall defines an interior peripheral edge of the rim (12).

4. The mold of claim 1, wherein the peripheral wall (14) further comprises an interior surface, an exterior surface, an upper portion and a lower portion, the upper portion being relatively smooth on the interior surface and the exterior surface, the lower portion having a raised pattern on the interior surface, whereby the raised pattern is imparted onto a food item being placed within the mold.

5. The mold of claim 4, further comprising a shelf between the upper portion and the lower portion of the peripheral wall (14).

6. The mold of claim 4, wherein the peripheral wall (14) defines a length from the base (22) to the rim (12), and further wherein the upper portion of the peripheral wall comprises about one third of the overall length.

7. The mold of claim 4, wherein the upper portion is relatively more flexible than the lower portion.

8. The mold of claim 1, wherein the peripheral wall (14) is formed from silicone.

9. The mold of claim 1, further comprising a plurality of cavities (26) within the interior space, each of the plurality of cavities (26) configured for molding a food item and being integrally formed from a flexible food-grade material.

## Patentansprüche

1. Form (10) zur Zubereitung eines Nahrungsmittels mit:
einer Basis (22);
einem Rand (12);
einer Umfangswand (14), die sich von der Basis zu dem Rand erstreckt und einen innenraum umgrenzt, wobei die Umfangswand und die Basis einstückig aus einem für Lebensmittel geeigneten Material geformt sind; und
**gekennzeichnet durch**:
ein U-förmiges Versteifungselement (24), das an der Form an dem Rand befestigt ist, wobei das Versteifungselement in dem die Form bildenden flexiblen Material eingeschlossen ist.

2. Form nach Anspruch 1, bei der das U-förmige \/ersteifungselement (24) weiterhin eine erste vertikale Wand und eine zweite vertikale Wand umfasst, wobei die erste vertikale Wand länger als die zweite vertikale Wand ist

3. Form nach Anspruch 2, bei der die erste vertikale Wand eine äußere Umfangskante des Randes (12) bildet, und die zweite Wand eine innere Umfangskante des Randes (12) bildet.

4. Form nach Anspruch 1, bei der die Umfangswand (14) weiterhin eine innere Oberfläche, eine äußere Oberfläche, einen oberen Teil und einen unteren Teil umfasst, wobei der obere Teil auf der Innenoberfläche und der Außenoberfläche relativ glatt ist wobei der untere Teil ein erhabenes Muster auf der Innenoberflläche aufweist, wodurch das erhabene Muster dem Lebensmittel erteilt wird, das in die Form eingebracht wird.

5. Form nach Anspruch 4, die weiterhin einen Absatz zwischen dem oberen Teil und dem unteren Teil der Umfangswand (14) umfasst,

6. Form nach Anspruch 4, bei der die Umfangswand (14) eine Länge von der Basis (22) bis zum Rand (12) bildet, und bei der weiterhin der obere Teil der Umfangswand ungefähr ein Drittel der Gesamtlänge umfasst.

7. Form nach Anspruch 4, bei der der obere Teil relativ stärker flexibel ist als der untere Teil.

8. Form nach Anspruch 1, bei der die Umfangswand (14) aus Silikon gebildet ist.

9. Form nach Anspruch 1, die weiterhin eine Vielzahl von Hohlräumen (26) in dem Innenraum umfasst, wobei jede der Vielzahl von Hohlräumen (26) zum Formen eines Nahrungsmittel konfiguriert ist und einstückig aus einem für Nahrungsmittel geeigneten flexiblen Material gebildet ist,

## Revendications

1. Moule (10) pour préparer un article alimentaire, comprenant :
une base (22) ;
un rebord (12) ;
une paroi périphérique (14) s'étendant vers le haut à partir de la base jusqu'au rebord et définissant un espace inférieur, la paroi périphérique et la base étant formées d'un seul tenant à partir d'un matériau flexible de classe alimentaire ; et étant **caractérisé**
un élément de renforcement en forme de U (24) fixé au moule au niveau du rebord, l'élément de renforcement étant encastré à l'intérieur du matériau flexible formant le moule.

2. Moule selon la revendication 1, dans lequel l'élément de renforcement en forme de U (24) comprend en outre une première paroi verticale et une seconde paroi verticale, la première paroi verticale étant plus longue que la seconde paroi verticale.

3. Moule selon la revendication 2, dans lequel la première paroi verticale définit un bord phériphérique extérieur du rebord (12) et la seconde paroi verticale définit un bord périphérique intérieur du rebord (12).

4. Moule selon la revendication 1, dans lequel la paroi périphérique (14) comprend en outre une surface intérieure, une surface extérieure, une partie supérieure et une partie inférieure, la partie supérieure étant relativement lisse sur la surface intérieure et la surface extérieure, la paroi inférieure possédant un motif relevé sur la surface intérieure, moyennant quoi le motif relevé est transmis sur un article alimentaire place à l'intérieur du moule.

5. Moule selon la revendication 4, comprenant en outre une plaquette entre la partie supérieure et la partie inférieur de la paroi périphérique (14).

6. Moule selon la revendication 4, lequel la paroi périphérique (14) définit une longueur à partir de la base (22) jusqu'au rebord (12), et en outre dans lequel la partie supérieure de la paroi périphérie comprend environ un tiers de la longueur totale.

7. Moule selon la revendication 4, dans lequel la partie supérieure est relativement plus flexible que la partie inférieure.

8. Moule selon la revendication 1, dans lequel la paroi périphérique (14) est formée de silicone,

9. Moule selon la revendication 1, comprenant en outre une pluralité de cavités (26) à l'intérieur de l'espace intérieur, chacune parmi la pluralité de cavités (26) étant configurée pour mouler un article alimentaire et formée d'un seul tenant à partir d'un matériau flexible de classe alimentaire.
